# EUROPEAN PATENT APPLICATION

(11) **EP 1 071 282 A2**
(43) Date of publication of application: **24.01.2001**
(21) Application number: 00114866.7
(22) Date of filing: 11.07.2000
(51) Int. Cl.: H04N 5/64, H04N 5/45

(54) **On-screen display control apparatus**

(30) Priority: 22.07.1999 JP 20766399
(71) Applicant: NEC CORPORATION, Tokyo (JP)
(72) Inventor: Fujita, Tomohisa, Minato-ku, Tokyo (JP)
(74) Representative: Glawe, Delfs, Moll & Partner

(57) **Abstract**

The present invention provides an on-screen display control apparatus capable of automatically matching a direction of an on-screen display with a display panel when the display panel is moved from the horizontal state to the vertical state or vice versa. The on-screen display control apparatus 10 includes: a sensor block 12 for detecting whether the screen is in the vertical state or in the horizontal state; and a control block 14 for on-screen displaying an operation menu or the like according to the vertical state or the horizontal state detected by the sensor block.

## Description

### BACKGROUND OF THE INVENTION

### 1. Field of the Invention

The present invention relates to an on-screen display control apparatus for controlling a display direction in the on-screen display technique for multi-displaying an operation menu and the like on a screen of an image display apparatus such as a plasma display and a liquid crystal display.

### 2. Description of the Related Art

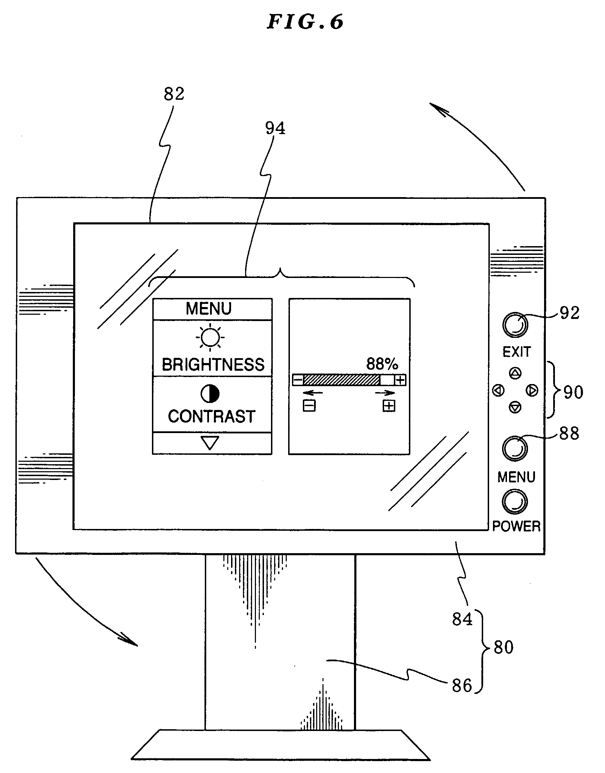

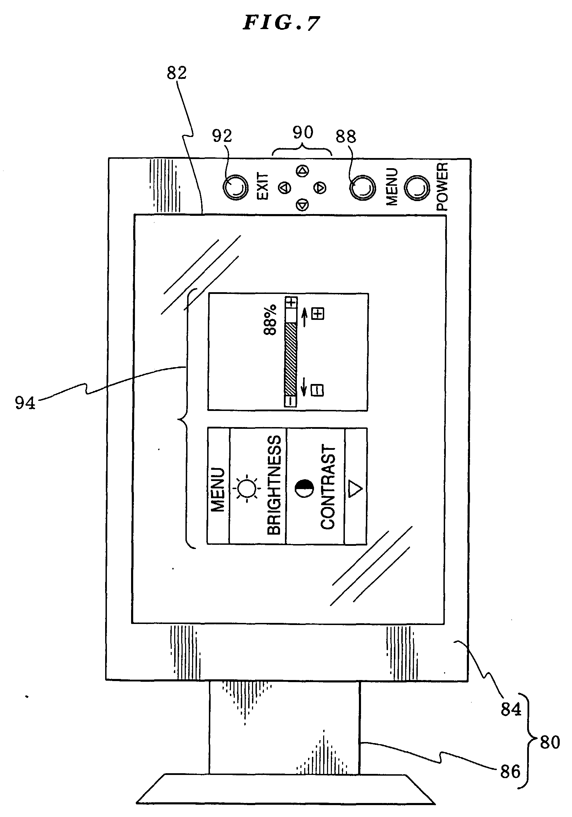

Fig. 6 and Fig. 7 are front views of an image display apparatus showing an example of an operation menu which is on-screen displayed. Hereinafter, explanation will be given with reference to these figures.

The image display apparatus 80 is, for example, a computer terminal CRT, plasma display, liquid crystal display or the like including a display panel 84 having a rectangular screen 82 and a support base 86 for rotatably supporting the display panel 84 so that the screen 82 is longer in the horizontal direction or in the vertical direction. As shown in Fig. 6, when the screen 82 is longer in the horizontal direction, the screen is in the "horizontal state". As shown in Fig. 7, when the screen 82 is longer in the vertical direction, the screen is in the "vertical state".

Moreover, on the image display apparatus 80, there are provided a menu button 88 for the on-screen display, a selector button 90, and an end button 92. The on-screen display is to display on the image of the screen 82, an operation menu 94 or the like for controlling, for example, an image distortion, contrast, X-Y positioning, X-Y expansion and contraction, and the like.

When the menu button 88 is pressed by a user, the operation menu 94 appears on the image of the screen 82. The user presses the selector button 90 while watching the operation menu 94, thus setting a preferable image output mode. When the end button 92 is pressed by the user, the operation menu 94 disappears from the screen 82.

As shown in Fig. 7, when the display panel 84 is rotated from the horizontal state to the vertical state, the operation menu 94 is also rotated with the screen 82 by 90 degrees and it becomes difficult to read the operation menu 94.

For this, in the conventional technique, the on-screen display direction is included in the operation menu 94 and a desired direction can be selected by pressing the selector button 90. Alternatively, the image display apparatus 80 has a manual switch (not depicted) for setting the on-screen display direction. The user operates this manual switch to select a desired direction. Thus, in the conventional technique, each time the display panel 84 is changed in direction from the horizontal state to the vertical state or vice versa, the user need to set the on-screen display direction.

### SUMMARY OF THE INVENTION

It is therefore an object of the present invention to provide an on-screen display control apparatus which automatically sets the on-screen display direction when the display panel direction is changed from the horizontal state to the vertical state or from the vertical to the horizontal state.

The on-screen display control apparatus according to the present invention is to be used in an image display apparatus comprising: a display panel having a rectangular screen; and a support base for rotatably supporting the display panel in a vertical state or in a horizontal state; the on-screen display control apparatus including: a sensor block for detecting whether the screen is in the vertical state or in the horizontal state; and a control block for on-screen displaying an operation menu or the like according to the vertical state or the horizontal state detected by the sensor block.

When the screen is in the horizontal state, the sensor block detects the horizontal state and the control block on-screen displays an operation menu or the like according to the horizontal state. Subsequently, when the display panel is rotated by 90 degrees, the screen is in the vertical state. Here, the sensor block detects the vertical state and the control block on-screen displays the operation menu or the like according to the vertical state. That is, the control block always on-screen displays the operation menu or the like matched with the direction of the screen. Thus, the operation menu or the like is displayed so that a user can easily see the operation menu or the like.

### BRIEF DESCRIPTION OF THE DRAWINGS

Fig. 1 is a block diagram showing an on-screen display control apparatus according to a first embodiment of the present invention.
Fig. 2 is a rear view of an image display apparatus having the on-screen display control apparatus of Fig. 1. Fig. 2 [1] shows the image display apparatus in its horizontal state and Fig. 2 [2] in its vertical state.
Fig. 3 is a front view of the image display apparatus having the on-screen display control apparatus of Fig. 1.
Fig. 4 is a block diagram showing an on-screen display control apparatus according to a second embodiment of the present invention.
Fig. 5 is a partial circuit diagram showing an on-screen display control apparatus according to a second embodiment of the present invention.
Fig. 6 shows an example of an operation menu on-screen displayed in an image display apparatus with its display panel in the horizontal direction.
Fig. 7 shows an example of an operation menu on-screen displayed in an image display apparatus with its display panel in the vertical direction.

### DESCRIPTION OF THE PREFERRED EMBODIMENTS

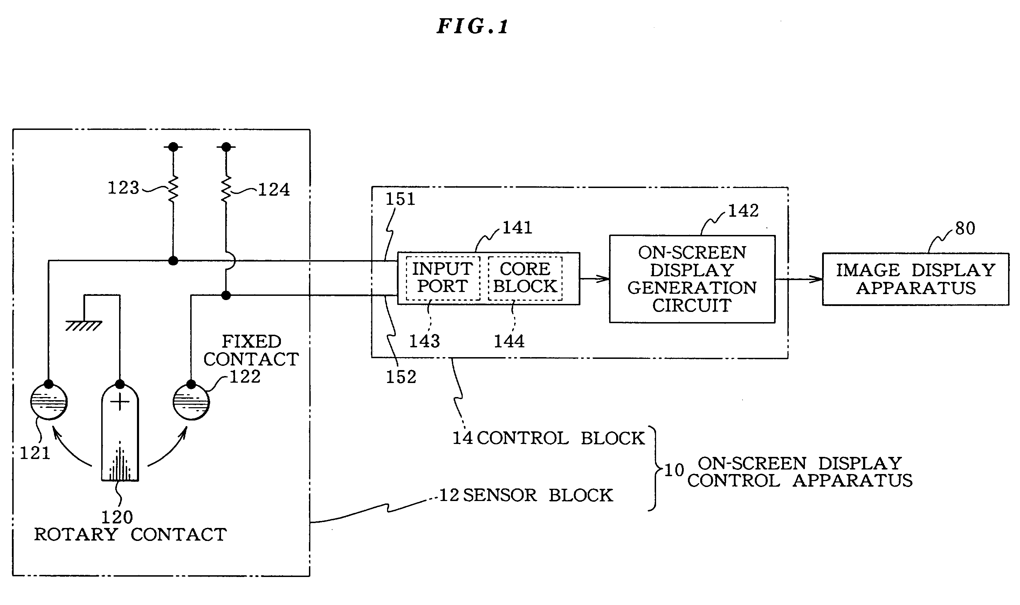

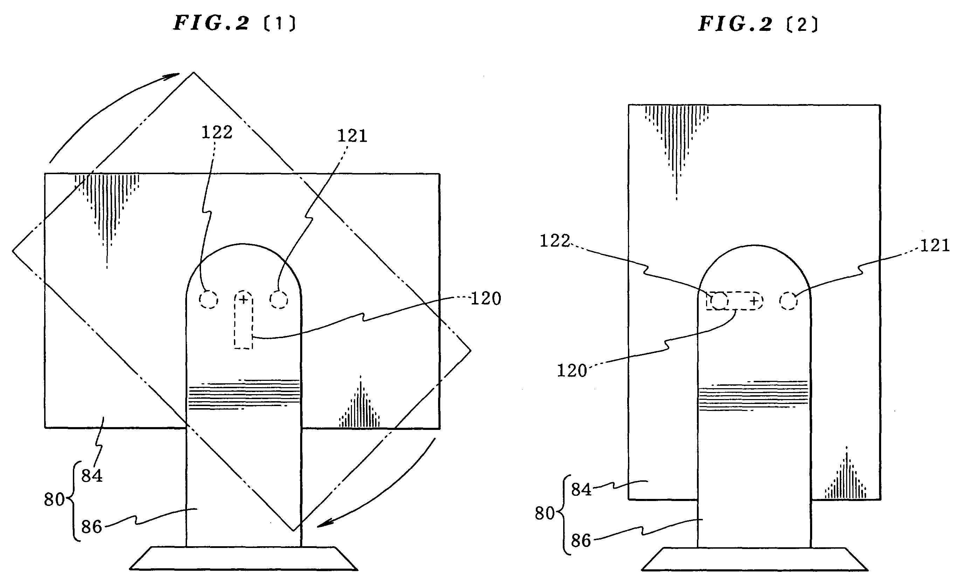

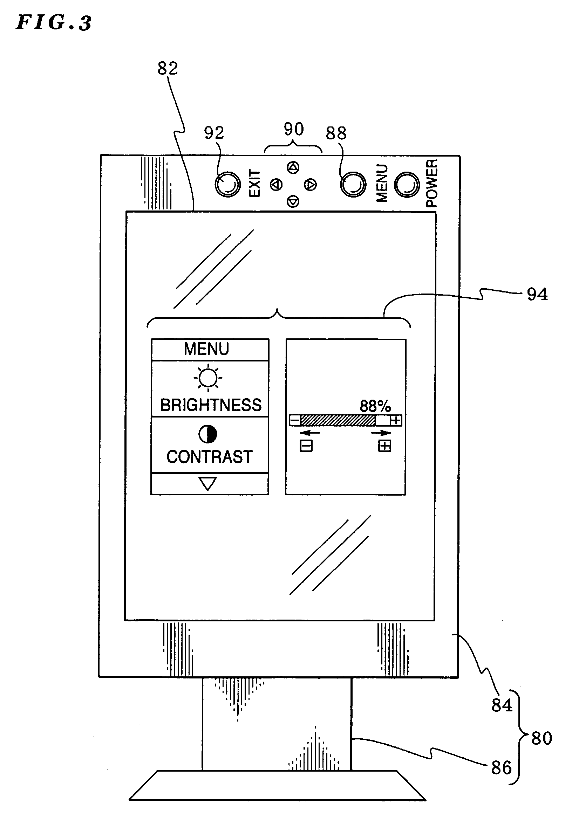

Fig. 1 is a block diagram showing an on-screen display control apparatus according to a first embodiment of the present invention. Fig. 2 is a rear view of an image display apparatus having the on-screen display control apparatus of Fig. 1. Fig. 2 [1] shows the image display apparatus in its horizontal state and Fig. 2 [2] in its vertical state. Fig. 3 is a front view of the image display apparatus having the on-screen display control apparatus of Fig. 1. Hereinafter, explanation will be given with reference to these figures. It should be noted that like components as in Fig. 6 are denoted by like reference symbols and their explanations will be omitted.

The on-screen display control apparatus 10 according to the present embodiment is used in an image display apparatus 80 including a display panel 84 having a rectangular screen 82 and a support base 86 for rotatably supporting the display panel 84, enabling the screen 82 in the horizontal state or in the vertical state. The on-screen display control apparatus 10 includes a sensor block 12 for detecting whether the screen 82 is in the vertical state or in the horizontal state, and a control block 14 for on-screen displaying an operation menu 94 or the like according to the state detected by the sensor block 12.

When viewed from the front of the display panel 84, the vertical state obtained by rotating the display panel 84 from the horizontal state clockwise by 90 degrees will be referred to as a first vertical state while the vertical state obtained by rotating the display panel 84 counterclockwise by 90 degrees will be referred to as a second vertical state. For example, Fig. 2 [2] and Fig. 3 show the second vertical state.

The sensor block 12 includes a rotary contact 120 which is fixed to the display panel 84 and rotates together with the display panel 84, a fixed contact 121 which is fixed to the support base 86 and brought into contact with the rotary contact 120 when the screen 82 is in the first vertical state, a fixed contact 122 which is fixed to the support base 86 and brought into contact with the rotary contact 120 when the screen 82 is in the second vertical state. The rotary contact 120 is grounded. The fixed contact 121 is supplied with a power source voltage via a pull-up resistor 123 and connected to the control block 14. The fixed contact 122 is supplied with a power source voltage via a pull-up resistor 124 and connected to the control block 14. The control block 14 includes microprocessor unit (MPU) 141 and an on-screen display generation circuit 142. The MPU 141 has an input port 143 and a core block 144. The on-screen display generation circuit 142 is bit-map type on-screen display IC which is known those skilled in the art. Moreover, the on-screen display generation circuit 142 has a function to change the display direction according to an external signal.

Next, explanation will be given on operation of the on-screen display control apparatus 10.

When the screen 82 is in the horizontal state, the rotary contact 120 is not in contact with the fixed contact 121 or 122 (Fig. 2 [1]). Accordingly, a power source voltage, i.e., H level (for example, 5V) is output from the fixed contacts 121 and 122 to the MPU 141 by the pull-up resistors 123 and 124, respectively. Since both of input terminals 151 and 152 are 'H', the MPU 141 determines that the screen 82 is in the horizontal state and transmits a signal corresponding to the horizontal state, to the on-screen display generation circuit 142. Then, the on-screen display generation circuit 142 displays the operation menu 94 or the like for the horizontal state.

Subsequently, when the display panel 84 is rotated by 90 degrees counterclockwise as viewed from the front, the screen 82 is in the second vertical state (Fig. 2 [2], Fig. 3). In this case, the rotary contact 120 is brought into contact only with the fixed contact 122. Accordingly, the H level is output from the fixed contact 121 to the MPU 141, while a grounding voltage, i.e., L level (for example, 0v) is output from the fixed contact 122 to the MPU 141. Since the input terminal 151 is 'H' and the input terminal 152 is 'L', the MPU 141 determines that the screen 82 is in the second vertical state and outputs a signal corresponding to the second vertical state, to the on-screen display generation circuit 142. Then, the on-screen display generation circuit 142 on-screen displays the operation menu 94 or the like for the second vertical state.

Moreover, when the display panel 84 is rotated by 90 degrees clockwise as viewed from the front, the screen 82 is in the first vertical state. In this case, the rotary contact 120 is brought into contact only with the fixed contact 121. Accordingly, the L level is output from the fixed contact 121 to the MPU 141. Since the input terminal 151 is 'L' and the input terminal 152 is 'H', the MPU 141 determines that the screen 82 is in the first vertical state and outputs a signal corresponding to the first vertical state, to the on-screen display generation circuit 142. Then, the on-screen display generation circuit 142 on-screen displays the operation menu 94 or the like for the first vertical state.

That is, upon detection of the first vertical state from the horizontal state, the on-screen display generation circuit 142 rotates the operation menu 94 or the like by 90 degrees counterclockwise from the horizontal state for on-screen display, and upon detection of the second vertical state from the horizontal state, the on-screen display generation circuit 142 rotates the operation menu 94 or the like by 90 degrees clockwise from the horizontal state for on-screen display.

On the contrary, upon detection of the horizontal state from the first vertical state, the on-screen display generation circuit 142 rotates the operation menu 94 or the like by 90 degrees clockwise from the first vertical state for on-screen display, and upon detection of the horizontal state from the second vertical state, the on-screen display operation circuit 142 rotates the operation menu 94 or the like by 90 degrees counterclockwise for on-screen display.

As has been described above, the control block 14 on-screen displays the operation menu 94 or the like always in the right state when the screen 82 is in the vertical state or the horizontal state. Thus, the user can easily see the operation menu 94 or the like.

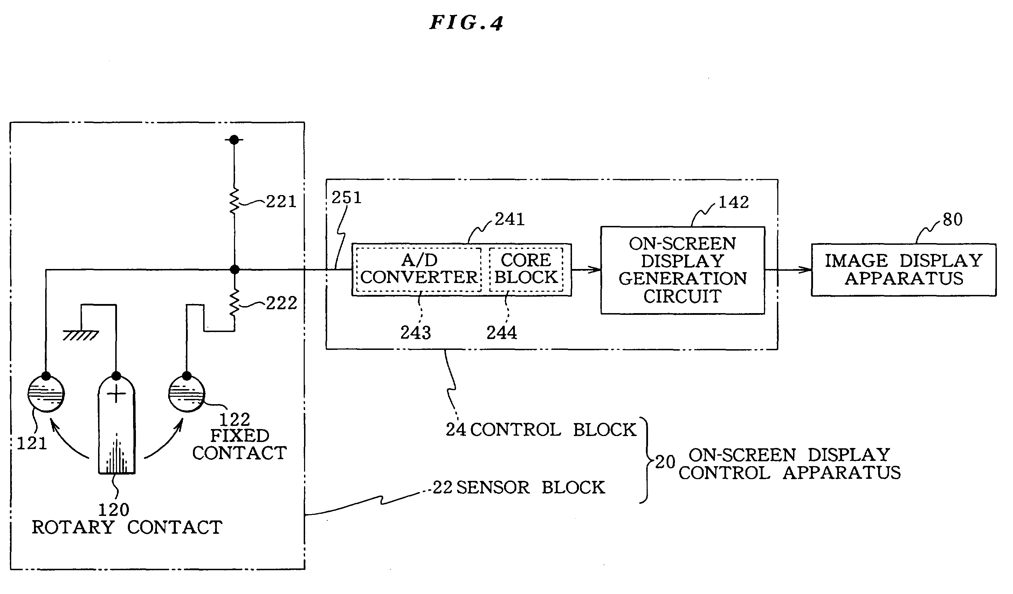

Fig. 4 is a block diagram showing an on-screen display control apparatus according to a second embodiment of the present invention. Hereinafter, explanation will be given with reference to Fig. 2 to Fig. 4. Note that like components as in Fig. 1 are denoted by like reference symbols and their explanations will be omitted.

The on-screen display control apparatus 20 according to the second embodiment includes a sensor block 22 for detecting whether the screen 82 is in the vertical state or in the horizontal state, and a control block 24 for on-screen displaying the operation menu 94 or the like according to the state detected.

In the sensor block 22, the rotary contact 120 is grounded; the fixed contact 121 is supplied with a power source voltage via a pull-up resistor 221 and connected to the control block 24; and the fixed contact 122 is connected to the fixed contact 121 via a voltage divider resistor 222. In the control block 24, the MPU 241 consists of an A/D converter 243 and a core block 244.

Next, explanation will be given on operation of the on-screen display control apparatus 20.

When the screen 82 is in the horizontal state, the rotary contact 120 is not in contact with the fixed contact 121 or 122 (Fig 2 [1]) . Accordingly, the input terminal 251 has Vh [V] identical to the power source voltage due to the pull-up resistor 221. This Vh [V] is converted by the A/D converter into a digital value. According to this digital value, the MPU 241 determines that the screen 82 is in the horizontal state.

Subsequently, when the display panel 84 is rotated by 90 degrees counterclockwise viewed from the front, the screen 82 is in the second vertical state (Fig. 2 [2], Fig. 3) . Here, the rotary contact 120 is brought into contact only with the fixed contact 122. Accordingly, the input terminal 251 has the power source voltage Vh divided by the pull-up resistor 221 and the voltage divider resistor 222. Here, when the pull-up resistor 221 has a resistance identical to the voltage divider resistor 222, the input terminal 251 has Vh/2 [V] . The Vh/v [V] is converted by the A/D converter 243 into a digital value. According to the digital value, the MPU 241 determines that the screen 82 is in the second vertical state.

Moreover, when the display panel 84 is rotated by 90 degrees clockwise viewed from the front, the screen 82 is in the first vertical state. In this case, the rotary contact 120 is in contact only with the fixed contact 121. Accordingly the input terminal 251 has a grounding voltage, i.e., 0 [V] . This 0 [V] is converted by the A/D converter into a digital value. According to the digital value, the MPU 241 determines that the screen 82 is in the first vertical state.

Thus, the on-screen display control apparatus 20 according to the second embodiment has the same effect as the first embodiment using only one input terminal 251 of the control block 24, i.e., a simplified wiring.

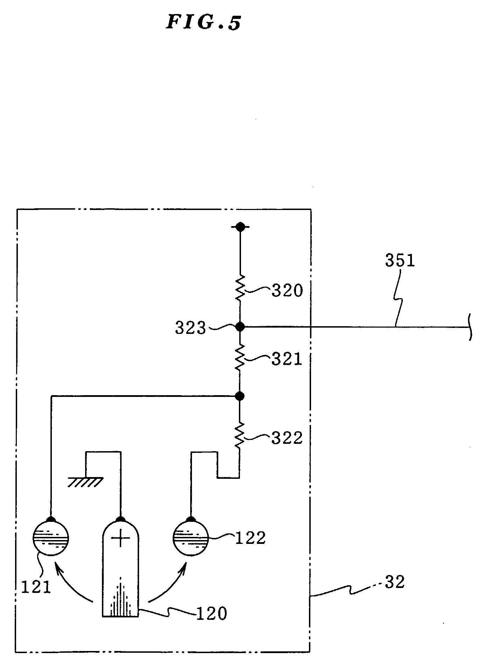

Fig. 5 shows a part of a circuit of an on-screen display control apparatus according to a third embodiment of the present invention. Hereinafter, explanation will be given with reference to this figure. Note that like components as in Fig. 4 are denoted by like reference symbols and their explanations are omitted.

The on-screen display control apparatus according to the third embodiment is identical to that of the second embodiment excluding the sensor block 32. In the sensor block 32, the rotary contact 120 is grounded; the fixed contact 121 is supplied with a power supply voltage via a pull-up resistor 320 and a voltage divider resistor 321; the fixed contact 122 is connected to the fixed contact 121 via a voltage divider resistor 322; and a connection point between the pull-up resistor 320 and the voltage divider resistor 321 is connected to the control block 24 (Fig. 4) .

Here, it is assumed that the pull-up resistor 320 and the voltage divider resistors 321 and 322 all have an identical resistance value. In this case, the input terminal 351 in the horizontal state has Vh [V], i.e., the power source voltage. The input terminal 351 in the second vertical state has 2Vh/3 [V] . The input terminal in the first vertical state has Vh/2 [V] .

Moreover, it is assumed that the pull-up resistor 320 and the voltage divider resistors 321 and 322 have resistance values 2 : 1 : 3. In this case, the input terminal 351 in the horizontal state has Vh [V] identical to the power source voltage. The input terminal 351 in the second vertical state has 2Vh/3 [V] . The input terminal 351 in the first vertical state has Vh/3 [V] .

It should be noted that the on-screen display control apparatus according to the present invention is not to be limited to the aforementioned first to the third embodiments. For example, the sensor block may be made from a micro switch, an optical sensor, a magnetic sensor or the like instead of the rotary contact and the fixed contacts.

In the on-screen display control apparatus according to the present invention, it is detected whether the screen is in the vertical or horizontal state and according to the state detected, an operation menu or the like is on-screen displayed so that a user can easily see the screen. Accordingly, when the display panel positioning is modified from the horizontal to the vertical state or from the vertical to the horizontal state, the user need not re-set the on-screen display direction.

The invention may be embodied in other specific forms without departing from the spirit or essential characteristic thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

The entire disclosure of Japanese Patent Application No. 11-207663 (Filed on July 22^{nd}, 1999) including specification, claims, drawings and summary are incorporated herein by reference in its entirety.

## Claims

1. An on-screen display control apparatus to be used in an image display apparatus comprising: a display panel having a rectangular screen; and a support base for rotatably supporting the display panel in a vertical state or in a horizontal state;
the on-screen display control apparatus including: a sensor block for detecting whether the screen is in the vertical state or in the horizontal state; and a control block for on-screen displaying an operation menu or the like according to the vertical state or the horizontal state detected by the sensor block.

2. An on-screen display control apparatus as claimed in Claim 1, wherein the control block on-screen displays the operation menu or the like always in a right direction regardless of the vertical or horizontal state of the screen.

3. An on-screen display control apparatus as claimed in Claim 1, wherein the sensor block detects a first vertical state when the screen is rotated by 90 degrees clockwise from the horizontal state to the vertical state and a second vertical state when the screen is rotated by 90 degrees counterclockwise from the horizontal state to the vertical state, and
the control block, upon detection of the first vertical state by the sensor block, rotates the operation menu or the like by 90 degrees counterclockwise from the horizontal state, and upon detection of the second vertical state by the sensor block, rotates the operation menu or the like by 90 degrees clockwise from the horizontal state.

4. An on-screen display control apparatus as claimed in Claim 3, wherein the sensor block includes a rotary contact which is fixed to the display panel and rotated together with the display panel, a first fixed contact which is fixed to the support base and brought into contact with the rotary contact when in the first vertical state, and a second fixed contact which is fixed to the support base and brought into contact with the rotary contact when in the second vertical state.

5. An on-screen display control apparatus as claimed in Claim 4, wherein the rotary contact is grounded; the first fixed contact is connected to the control block and is supplied with a power source voltage via a first pull-up resistor; and the second fixed contact is connected to the control block and is supplied with a power source voltage via a second pull-up resistor.

6. An on-screen display control apparatus as claimed in Claim 4, wherein the rotary contact is grounded; the first fixed contact is connected to the control block and is supplied with a power source voltage via a pull-up resistor; and the second fixed contact is connected to the first fixed contact via a voltage divider resistor.

7. An on-screen display control apparatus as claimed in Claim 4, wherein the rotary contact is grounded; the first fixed contact is supplied with a power source voltage via a pull-up resistor and a first voltage divider resistor which are connected in series to each other; the second fixed contact is connected to the first fixed contact via a second voltage divider resistor; and the connection point between the pull-up resistor and the first voltage divider resistor is connected to the control block.
